# EUROPÄISCHE PATENTSCHRIFT

(11) **EP 2 960 201 B1**
(45) Veröffentlichungstag und Bekanntmachung des Hinweises auf die Patenterteilung: **17.05.2017**
(21) Anmeldenummer: 15174065.1
(22) Anmeldetag: 26.06.2015
(51) Int. Cl.: B67C 3/22, F16L 58/10, F16L 58/08, F16L 58/14, F16L 39/06, F16L 41/03

(54) **DREHVERTEILER ZUM VERTEILEN VON FLIESSFÄHIGEN MEDIEN**
ROTARY DISTRIBUTOR FOR DISTRIBUTING OF FREE-FLOWING MEDIA
DISTRIBUTEUR ROTATIF DESTINÉ À DISTRIBUER DES MILIEUX POUVANT S'ÉCOULER

(30) Priorität: 27.06.2014 DE 102014109082
(43) Veröffentlichungstag der Anmeldung: 30.12.2015
(73) Patentinhaber: Krones AG, 93073 Neutraubling (DE)
(72) Erfinder: Knieling, Erwin, 93073 Neutraubling (DE); Berner, Ludwig, 93073 Neutraubling (DE); Schönfelder, Markus, 93073 Neutraubling (DE)
(74) Vertreter: Bittner, Bernhard

(56) Entgegenhaltungen:
- EP-A1- 2 030 942
- DE-A1-102007 062 470

## Beschreibung

Die vorliegende Erfindung bezieht sich auf eine Verteilerwelle gemäß dem Oberbegriff des Anspruchs 1, und einen Drehverteiler zum Verteilen von fließfähigen Medien gemäß dem Oberbegriff des Anspruchs 2, und wie aus der EP 2 030 942 A bekannt. Derartige Drehverteiler sind aus dem Stand der Technik seit langem bekannt. Diese werden beispielsweise in Füllmaschinen eingesetzt, um aus einem stehenden Reservoir Medien, wie beispielsweise ein Getränk, auf mehrere Füllorgane, wie beispielsweise Füllventile, zu verteilen.

Aus dem Stand der Technik bekannte Vorrichtungen weisen dabei teilweise eine sogenannte Innenverteilerwelle auf, welche Medien, wie das abzufüllende Produkt oder eine andere Flüssigkeit von einem stehenden Teil, wie einem Ventilknoten der Anlage in das drehende Teil bringt. Daneben kann diese Verteilerwelle auch dazu dienen, um für eine Vorspannung, eine Entlastung oder eine Beaufschlagung mit einem Vakuum zu sorgen. Da diese Verteilerwelle bzw. zumindest Oberflächen dieser Verteilerwellen mit dem Produkt und anderen Medien in Berührung kommen, weist diese Verteilerwelle üblicherweise Beschichtungen auf, um die Betriebszeit zu verlängern.

Es ist auch möglich, diese Verteilerwelle wieder neu zu beschichten, um auf diese Weise eine faktisch neuwertige Welle zu erreichen, die wieder bereit für eine vorgegebene Zahl an Betriebsstunden ist. Aufgrund aggressiver Produkte, wie beispielsweise salzhaltiger Getränke, Energy-Drinks, Osmosewasser, usw. treten jedoch Probleme bei der Beschichtung auf. Diese Probleme treten jedoch ganz überwiegend in dem produktberührten Bereich auf, in dem diese Produkte zu Untergrundkorrosion führen und die Beschichtungen Blasen bilden können, Teile wegplatzen können und dergleichen. Insbesondere können dadurch auch Laufflächen von Rotationsdichtungen zerstört werden, wodurch eine sichere Abdichtung zwischen feststehendem und rotierendem Teil des Drehverteilers nicht mehr möglich sein kann. Im Stand der Technik wurde bereits versucht, mit unterschiedlichsten Grundwerkstoffen zu arbeiten und auch mit unterschiedlichen Beschichtungen. Allerdings hat sich gezeigt, dass meistens nur mit den jeweils edelsten und damit teuersten Werkstoffen das Problem behoben werden kann. Damit schwanken jedoch die Preise für derartige Verteilerwellen um einen Faktor 1:6 und weiterhin stellen diese Kosten bei den Kosten der jeweiligen Maschine einen erheblichen Faktor dar.

Wenn weiterhin die vollständige Verteilerwelle aus einem edlen Werkstoff gefertigt wird, wird man aus Kostengründen versuchen, das Rundmaterial einzeln zu bestellen, um so mit so wenig Aufwand wie möglich zu beschichten. Dadurch erhöht sich jedoch die Bearbeitungszeit zur Fertigstellung des Bauteils, weil das Material so hart ist und sich schwer bearbeiten lässt.

Der vorliegenden Erfindung liegt daher die Aufgabe zugrunde, die Kosten für derartige Vorrichtungen und insbesondere derartige Verteilerwellen zu senken. Diese Aufgabe wird erfindungsgemäß durch die Gegenstände der unabhängigen Ansprüche erreicht. Vorteilhafte Ausführungsformen und Weiterbildungen sind Gegenstand der Unteransprüche.

Ein erfindungsgemäßer Drehverteiler zum Verteilen von fließfähigen Medien weist eine Verteilerwelle sowie einen Verteilerkopf auf, wobei dieser Verteilerkopf bezüglich der Verteilerwelle und bezüglich einer vorgegebenen Drehachse drehbar ist. Weiterhin weist der Verteilerkopf wenigstens eine erste Eingangsöffnung zum Zuführen des fließfähigen Mediums und eine Vielzahl von Ausgangsöffnungen zum Abführen des fließfähigen Mediums auf, wobei eine Strömungsverbindung zwischen dieser Eingangsöffnung und den Ausgangsöffnungen besteht. Die Verteilerwelle weist wenigstens ein erstes Verteilerwellensegment und ein zweites Verteilerwellensegment auf, wobei das zweite Verteilerwellensegment lösbar an dem ersten Verteilerwellensegment angeordnet ist und sich das zweite Verteilerwellensegment in Richtung der Drehachse an das erste Verteilerwellensegment anschließt und wobei das zweite Verteilerwellensegment näher an dem Verteilerkopf angeordnet ist als das erste Verteilerwellensegment. Daneben weist wenigstens das zweite Verteilerwellensegment eine dem fließfähigen Medium zugewandte Oberfläche auf. Erfindungsgemäß unterscheiden das erste Verteilerwellensegment und das zweite Verteilerwellensegment sich voneinander hinsichtlich ihrer Werkstoffe und/oder hinsichtlich einer Oberflächenbeschichtung.

Es wird daher vorgeschlagen, dass die Verteilerwelle nicht wie im Stand der Technik einteilig ausgeführt wird sondern wenigstens zweiteilig. Mit anderen Worten kann der obere insbesondere produktberührte Bereich von einem unteren Teil der Verteilerwelle entkoppelt werden. Dabei wäre es beispielsweise möglich, dass der obere Produktbereich hinsichtlich seines Grundmaterials entsprechend ausgeführt ist, d.h. mit entsprechend edlen Materialien und dass ansonsten nicht die gesamte Verteilerwelle in diesem edlen Werkstoff gefertigt werden muss.

So könnte beispielsweise das erste Verteilerwellensegment, welches beispielsweise ein im Einbauzustand unteres Verteilerwellensegment ist, mit Tieflochbohrungen und Passmaßen ausgestattet werden, hierfür jedoch ein günstigeres und einfacher zu bearbeitendes Standardmaterial verwendet werden. Nur der obere Bereich, der produktberührt ist und zu Problemen beispielsweise an den Laufflächen von Dichtungseinrichtungen führt, kann entsprechend mit edlen Materialien ausgeführt werden. Daneben wäre es jedoch auch möglich, dass die beiden Segmente sich hinsichtlich ihrer Beschichtung unterscheiden oder beispielsweise nur das zweite Verteilerwellensegment eine Beschichtung aufweist, das erste Segment jedoch nicht. Auch wäre es möglich, das zweite Verteilerwellensegment in einem Standardwerkstoff zu fertigen, aber jedoch den vollständigen produktberührten Bereich zu beschichten, um Untergrundkollisionen zu verhindern.

Auf diese Weise ist es möglich, dass, insbesondere wenn günstigere Vorrichtungen gefordert sind, Kosten eingespart werden können und auf diese Weise auch flexibler und günstiger Probleme bei den Maschinen behandelt werden können. Falls sich die Wellenverteilersegmente hinsichtlich ihres Werkstoffes unterscheiden, ist es mit der Erfindung möglich, dass nur noch ein kleiner Teil mit dem jeweiligen edlen Werkstoff gefertigt werden muss. Falls eine Beschichtung insbesondere in dem produktberührten Bereich des zweiten Verteilerwellensegments vorgesehen ist, kann diese Beschichtung den Kontakt zu dem (gegebenenfalls weniger edlen) Grundmaterial verhindern.

Damit wird im Rahmen der Erfindung vorgeschlagen, dass wenigstens alternativ die beiden Verteilerwellensegmente aus unterschiedlichen Materialien hergestellt sind oder sich hinsichtlich der Beschichtung unterscheiden. Unter "sich in der Beschichtung unterscheiden" kann verstanden werden, dass die Oberflächen der beiden Verteilerwellensegmente unterschiedliche Beschichtungen aufweisen, es wäre jedoch auch denkbar und bevorzugt, dass lediglich das zweite Verteilerwellensegment eine Beschichtung aufweist, das erste Verteilerwellensegment jedoch nicht. Auch könnten die genannten Maßnahmen kombiniert werden, d.h. die Verteilerwellensegmente können sowohl unterschiedliche Werkstoffe aufweisen als auch sich hinsichtlich der Beschichtungen (beispielsweise dem Vorhandensein oder Nichtvorhandensein einer Beschichtung) unterscheiden.

Daneben wäre es auch möglich, dass sich die Beschichtungen auf den Verteilerwellensegmenten hinsichtlich ihrer Beschichtungsdicke und/oder eines Beschichtungsmaterials unterscheiden.

Die vorliegende Erfindung kann insbesondere für Füllmaschinen verwendet werden, es wäre jedoch auch ein Einsatz bei anderen Maschinen denkbar, bei denen ebenfalls von einem zentralen Reservoir auf mehrere Stationen aufgeteilt wird, wie beispielsweise Sterilisationsmaschinen, Blasformmaschinen und dergleichen. Bei dem fließfähigen Medium handelt es sich insbesondere um eine Flüssigkeit, es wäre jedoch auch eine Anwendung auf andere Medien denkbar, wie beispielsweise Gase, Spülmedien und dergleichen.

Bei einer weiteren bevorzugten Ausführungsform bildet das zweite Verteilerwellensegment einen Kanal zum Leiten des fließfähigen Mediums aus (es ist also insbesondere als Hohlwellensegment ausgebildet) und eine diesen Kanal umgebende Wandung ist geschlossen d.h. ohne Öffnungen ausgebildet. Auch derartige Öffnungen stellen Schwachstellen hinsichtlich einer Produktberührung dar. Entsprechend kann jedoch das erste Verteilerwellensegment derartige Öffnungen aufweisen.

Bei einer weiteren vorteilhaften Ausführungsform weist die Vorrichtung wenigstens eine weitere Zuführung für ein weiteres Medium auf, wobei auch dieses weitere Medium dem Verteilerkopf zugeführt werden kann. Bei diesem weiteren Medium kann es sich beispielsweise um Zusatzkomponenten für ein Getränk handeln, aber auch um Druckgase, Sterilisationsmittel oder Reinigungsmittel. Im Falle einer Heißabfüllung von Getränken kann eine derartige weitere Zuführung auch zur Produktzirkulation dienen. Dabei kann in einer vorteilhaften Weiterführung auch dieser medienführende Bereich in der erfindungsgemäßen Ausführung ausgebildet sein.

Bei einer weiteren vorteilhaften Ausführungsform bildet die Verteilerwelle einen Innenkanal aus, durch den das Produkt strömt.

Bei einer weiteren vorteilhaften Ausführungsform weist auch das erste Verteilerwellensegment eine dem fließfähigen Medium zugewandte Oberfläche auf. Bei dieser Ausgestaltung strömt damit das fließfähige Medium zunächst durch das erste Verteilerwellensegment und anschließend durch das zweite Verteilerwellensegment. Dabei kommt insbesondere die besagte Oberfläche, d.h. die dem Produkt zugewandte Oberfläche auch unmittelbar mit dem fließfähigen Medium in Berührung.

Bei einer weiteren vorteilhaften Ausführungsform weist das zweite Verteilerwellensegment an der dem fließfähigen Medium zugewandten Oberfläche eine Beschichtung auf. Durch diese Beschichtung kann - wie oben erwähnt - die Haltbarkeit dieses zweiten Verteilerwellensegments verbessert werden.

Bei einer bevorzugten Ausführungsform erstreckt sich diese Beschichtung jedoch auch in Oberflächenbereiche des zweiten Verteilerwellensegments, welche nicht von den fließfähigen Medien erreicht werden. Dieser besonders bevorzugten Ausführungsform liegt die Überlegung zugrunde, dass die Oberflächen insbesondere auch in den Bereichen besonders anfällig sind, in denen die Beschichtung endet.

Damit wird hier vorgeschlagen, dass ein derartiger Übergang von einer Beschichtung in einen nicht beschichteten Bereich in eine Region verlegt wird, welche von dem fließfähigen Medium nicht erreicht und/oder berührt werden kann, beispielsweise einen Bereich, der sich jenseits einer Dichtung befindet, welche einen Zutritt des fließfähigen Mediums zu dem jeweiligen Bereich verhindert.

Bevorzugt ist zwischen dem ersten Verteilerwellensegment und dem zweiten Verteilerwellensegment eine Dichtungseinrichtung angeordnet. Dabei ist es beispielsweise möglich, dass die beiden Verteilerwellensegmente unmittelbar aneinander angeordnet sind und dabei Oberflächen dieser beiden Verteilerwellensegmente unmittelbar aneinander anliegen. Um das Eintreten von Medien in einen Berührungsbereich der beiden Verteilerwellensegmente zu verhindern, kann eine Dichtungseinrichtung etwa in Form eines O-Rings vorgesehen sein. Bei einer weiteren vorteilhaften Ausführungsform ist wenigstens ein Bereich einer Oberfläche des zweiten Verteilerwellensegments, welche Oberfläche an einer Oberfläche des ersten Verteilerwellensegments anliegt, beschichtet. Dieser Bereich kann - wie gerade beschrieben - üblicherweise nicht mit dem fließfähigen Medium in Berührung kommen, insbesondere, wenn dies durch eine Dichtungseinrichtung verhindert wird. Damit kann jedoch auch der Übergangsbereich zwischen einem beschichteten und einem nicht beschichteten Bereich nicht mit dem fließfähigen Medium oder auch anderen Medien in Berührung kommen. Bevorzugt erstreckt sich damit eine Beschichtung über diese Dichtungseinrichtung hinweg, so dass insbesondere die Anfänge der Beschichtung nicht durch das Produkt angegriffen werden können.

Bei einer weiteren vorteilhaften Ausführungsform ist das zweite Verteilerwellensegment aus einem Material gefertigt, welches aus einer Gruppe von Materialien ausgewählt ist, welche die Edelstähle 1.4301, 1.4404, 1.4435, 1.4539, 1.4552, 1.4581, 1.4439, 2.4856 enthält.

Vorteilhaft ist das erste Verteilerwellensegment aus einem Material gefertigt, welches aus einer Gruppe von Materialien ausgewählt ist, welche die Edelstähle 1.4301, 1.4404, 1.4435, 1.4539, 1.4552, 1.4581, 1.4439, 2.4856 enthält.

Bei einer weiteren vorteilhaften Ausführungsform ist wenigstens eine Beschichtung aus einer Gruppe von Beschichtungen ausgewählt, welche Keramikbeschichtungen, Metallbeschichtungen und Kunststoffbeschichtungen und dergleichen, insbesondere RZ100/4 Chromoxid sowie RX50, RX55, RX70 und RX75 jeweils in einer Schichtdicke von 0,1 bis 0,4 mm enthält.

Bei einer weiteren vorteilhaften Ausführungsform ist an wenigstens einem Oberflächenabschnitt des zweiten Verteilerwellensegments eine erste Dichtungseinrichtung angeordnet. Vorteilhaft ist diese Dichtungseinrichtung radial außerhalb dieses Verteilerwellensegments bzw. eines Bereiches des Verteilerwellensegments angeordnet. Im Betrieb kann die Flüssigkeit dabei insbesondere bis zu dieser Dichtung gelangen. Dieser Bereich des Verteilerwellensegments ist besonders empfindlich und daher ist bevorzugt zumindest dieser Bereich aus dem edlen Werkstoff hergestellt und/oder mit einer entsprechenden Beschichtung versehen. Bevorzugt liegt diese Dichtungseinrichtung an einer den Innenkanal des zweiten Verteilerwellensegments begrenzenden Umfangswandung an. Insbesondere liegt die Dichtungseinrichtung an einer Oberfläche des zweiten Verteilerwellensegments an, welche einen Kanal, durch den das fließfähige Medium strömt, nicht begrenzt.

Bei einer weiteren vorteilhaften Ausführungsform ist die Dichtungseinrichtung eine Gleitdichtung. Es wäre weiterhin auch möglich, dass einem Bereich dieser Dichtung auch ein Schmiermittel zugeführt wird.

Bei einer weiteren vorteilhaften Ausführungsform ist an dem zweiten Verteilerwellensegment auch eine Lagereinrichtung angeordnet (bzw. liegt an diesem an). Dabei ist es insbesondere möglich, dass eine erste Lagereinrichtung an dem zweiten Verteilerwellensegment abgestützt ist, um so einen drehbaren Bereich des Drehverteilers drehbar gegenüber diesem zweiten Verteilerwellensegment zu lagern. Vorteilhaft weist die Vorrichtung eine weitere Lagereinrichtung auf und diese ist bevorzugt entlang der Drehrichtung versetzt gegenüber der ersten Lagereinrichtung und besonders bevorzugt ist diese zweite Lagereinrichtung an dem ersten Verteilerwellensegment angeordnet.

Bei einer weiteren vorteilhaften Ausführungsform liegt wenigstens ein Abschnitt des zweiten Verteilerwellensegments an dem Verteilerkopf an und/oder ist unmittelbar benachbart zu wenigstens einem Bereich des Verteilerkopfes angeordnet. Gleichwohl kann in diesem Bereich, in dem der Abschnitt des zweiten Verteilerwellensegments an dem Verteilerkopf anliegt, Flüssigkeit hindurchtreten, so dass auch hier ein besonders empfindlicher Bereich entsteht. Vorteilhaft ist wenigstens dieser Bereich aus dem besagten edlen Werkstoff gefertigt und/oder weist eine Beschichtung auf.

Bei einer weiteren bevorzugten Ausführungsform ist auch ein Bereich einer Außenoberfläche des zweiten Verteilerwellensegments mit einer Beschichtung versehen. Vorteilhaft ist jedoch ein Bereich der Außenoberfläche des zweiten Verteilerwellensegments unbeschichtet. Vorteilhaft erstreckt sich die Beschichtung der Außenoberfläche des zweiten Verteilerwellensegments ausgehend von Bereichen, welche von dem fließfähigen Medium erreicht werden können, auch in Bereich, welche nicht von dem fließfähigen Medium erreicht werden können. Vorteilhaft liegt eine Dichtungseinrichtung wenigstens an einem beschichteten Bereich der Außenoberfläche des zweiten Verteilerwellensegments an.

Die vorliegende Erfindung ist weiterhin auf eine Füllvorrichtung gerichtet. Diese weist einen drehbaren Träger auf, an den eine Vielzahl von Füllelementen angeordnet ist. Erfindungsgemäß weist die Füllvorrichtung einen Drehverteiler der oben beschriebenen Art auf, der eine abzufüllende Flüssigkeit auf die einzelnen Füllelemente aufteilt oder in eine Produktvorlage wie einen Ringkessel überführt.

Die vorliegende Erfindung ist weiterhin auf eine Verteilerwelle zum Verteilen von fließfähigen Medien gerichtet, wobei die Verteilerwelle wenigstens abschnittsweise als Hohlwelle mit einem Kanal zum Leiten des fließfähigen Mediums ausgebildet ist und die Verteilerwelle wenigstens ein erstes Verteilerwellensegment und ein zweites Verteilerwellensegment aufweist, wobei das zweite Verteilerwellensegment lösbar an dem ersten Verteilerwellensegment angeordnet ist und sich das zweite Verteilerwellensegment an das erste Verteilerwellensegment anschließt und wobei wenigstens das zweite Verteilerwellensegment eine dem fließfähigen Medium zugewandte Oberfläche aufweist und wobei sich das erste Verteilerwellensegment und das zweite Verteilerwellensegment hinsichtlich ihrer Werkstoffe und/oder hinsichtlich einer Oberflächenbeschichtung voneinander unterscheiden.

Bei einer vorteilhaften Ausführungsform weisen sowohl das erste Verteilerwellensegment als auch das zweite Verteilerwellensegment einen Kanal zum Leiten des fließfähigen Mediums auf. Bei diesem fließfähigen Medium handelt es sich insbesondere um eine Flüssigkeit. Bevorzugt ist ein Querschnitt des in dem ersten Verteilerwellensegment ausgebildeten Kanals zum Leiten des fließfähigen Mediums gleich einem in dem zweiten Verteilerwellensegment ausgebildeten Kanal. Vorteilhaft ist das erste Verteilerwellensegment und/oder das zweite Verteilerwellensegment einteilig ausgebildet.

Bevorzugt ist die Verteilerwelle in der oben beschriebenen Art ausgeführt.

Weitere Vorteile und Ausführungsform ergeben sich aus den beigefügten Zeichnungen: Darin zeigen:
- Fig. 1a, 1b: zwei Darstellungen eines erfindungsgemäßen Drehverteilers;
- Fig. 2: eine vereinfachte Schnittdarstellung des in Fig. 1 gezeigten Drehverteilers;
- Fig. 3: eine Draufsicht auf den Drehverteiler aus Fig. 2;
- Fig. 4: eine weitere Schnittdarstellung eines Drehverteilers;
- Fig. 5: eine Detailansicht des in Fig. 4 gezeigten Drehverteilers;
- Fig. 6: eine Darstellung eines ersten Verteilerwellensegments;
- Fig. 7: eine Schnittdarstellung des in Fig. 6 gezeigten Verteilerwellensegments;
- Fig. 8: eine weitere Darstellung des ersten Verteilerwellensegments;
- Fig. 9: eine Ansicht von oben auf das erste Verteilerwellensegment;
- Fig. 10: eine Darstellung von unten auf das erste Verteilerwellensegment;
- Fig. 11: eine Draufsicht von oben auf das zweite Verteilerwellensegment;
- Fig. 12: eine Schnittdarstellung des zweiten Verteilerwellensegments;
- Fig. 13: eine vergrößerte Darstellung des in Fig. 12 gezeigten Verteilerwellensegments;
- Fig. 14: eine perspektivische Darstellung des zweiten Verteilerwellensegments;
- Fig. 15: eine weitere Darstellung von unten des zweiten Verteilerwellensegments;
- Fig. 16: eine Schnittdarstellung des zweiten Verteilerwellensegments;
- Fig. 17: eine Außenansicht des zweiten Verteilerwellensegments; und
- Fig. 18: eine grob schematische Darstellung einer erfindungsgemäßen Fülleinrichtung.

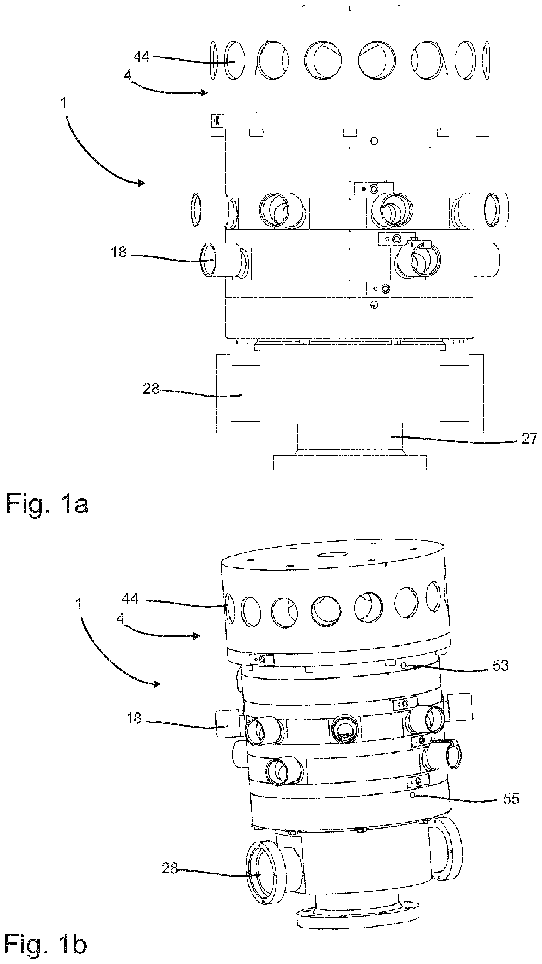

Figuren 1a, 1b zeigen zwei Darstellungen eines erfindungsgemäßen Drehverteilers 1. Dieser Drehverteiler 1 weist dabei einen Verteilerkopf 4 auf, der drehbar angeordnet ist und eine Vielzahl von Ausgangsöffnungen 44 auf, welche beispielsweise im Falle einer Füllmaschine Flüssigkeiten zu Füllelementen führen können. Das Bezugszeichen 27 kennzeichnet eine Zuführeinrichtung, um ein fließfähiges Medium und insbesondere ein abzufüllendes Produkt zuzuführen. Über eine weitere Zuführöffnung 28 können weitere Medien, wie beispielsweise Reinigungs-(CIP)-Medien zugeführt werden. Das Bezugszeichen 18 kennzeichnet eine weitere Zuführöffnung, über die beispielsweise weitere Medien dem Drehverteiler zugeführt werden können, wie beispielsweise zusätzliche Getränkekomponenten, Gase und dergleichen.

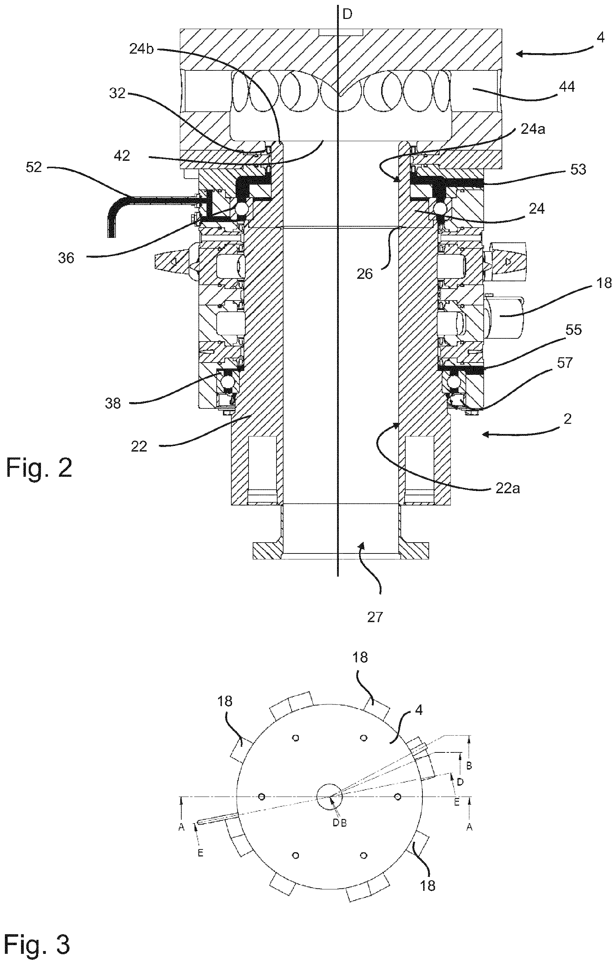

Figur 2 zeigt eine Schnittdarstellung des in Figur 1 gezeigten Drehverteilers. Auch hier ist wieder der Verteilerkopf bzw. das Verteilerelement 4 vorgesehen bzw. dargestellt und eine der Austrittsöffnungen 44. Daneben weist der Verteilerkopf auch eine Zuführöffnung 42 auf, über welche das fließfähige Medium dem Verteilerkopf 4 zugeführt wird. Diese Öffnung steht hier in Strömungsverbindung mit den einzelnen Austrittsöffnungen 44.

Das Bezugszeichen 2 kennzeichnet eine Verteilerwelle, die sich hier aus einem ersten Verteilerwellenelement 22 und einem zweiten Verteilerwellenelement 24 zusammensetzt. Diese beiden Verteilerwellenelemente 22, 24 sind hier mittels Schraubverbindungen aneinandergeschraubt. Das Bezugszeichen 36 kennzeichnet ein Lager, welches zur drehbaren Lagerung des Verteilerkopfes 4 hier gegenüber dem zweiten Verteilerwellenelement 24 dient. Das Bezugszeichen 22a kennzeichnet eine Oberfläche und insbesondere eine Innenoberfläche des ersten Verteilerwellensegments 22. Diese Oberfläche wird dabei von dem fließfähigen Medium berührt. Das Bezugszeichen 24a bezieht sich auf eine Oberfläche bzw. Innenoberfläche des zweiten Verteilerwellensegments 24, welche ebenfalls von dem abzufüllenden Produkt berührt wird. Im Falle des zweiten Verteilerwellensegments kann jedoch die abzufüllende Flüssigkeit bzw. das fließfähige Medium (zwar ungewollt) auch über die gekrümmte umlaufende Stirnfläche 24b des zweiten Verteilerwellensegments 24 hinwegströmen.

Das Bezugszeichen D kennzeichnet die Drehachse bezüglich derer der Verteilerkopf 4 drehbar ist.

Das Bezugszeichen 53 kennzeichnet eine Zuführöffnung, über welche der Vorrichtung ein Schmiermittel zugeführt werden kann. Dieses Schmiermittel ist hier schwarz dargestellt. Allerdings wird verhindert, dass das Schmiermittel in den Bereich gelangen kann, in dem sich auch das fließfähige Medium, beispielsweise das Getränk, befinden kann. Dabei ist eine umlaufende Dichteinrichtung 32 in Form einer Gleitringdichtung vorgesehen, welche den oberhalb dieser Dichtung 32 liegenden Bereich den von dem unterhalb der Dichtung liegenden Bereich abdichtet.

Das Bezugszeichen 38 kennzeichnet eine weitere Lagereinrichtung, welche zum drehbaren Lagern von Bereichen wie etwa des Drehverteilers gegenüber dem ersten Verteilerwellensegment 22 dient. Das Bezugszeichen 52 kennzeichnet einen Abfluss zum Ablassen von Schmiermittel beispielsweise nach einem Schmiervorgang. Über eine weitere Öffnung 55 kann ebenfalls der Lagerung 38 ein Schmiermittel zugeführt werden. Unterhalb des Lagers 38 ist eine Dichtungseinrichtung 57, wie beispielsweise eine Labyrinth-Dichtung, vorgesehen.

Im Bereich dieser Dichtungseinrichtung 57 kann auch ein Fettaustritt vorgesehen sein, so dass in diesem Bereich auch ein Inspektionspunkt vorgesehen ist, mittels dessen die ordnungsgemäße Schmierung geprüft werden kann. Diese beiden Öffnungen 53, 55 zum Schmiermittelzuführen sind auch in Figur 1b erkennbar. Dabei können die jeweiligen Lagerräume bei der Montage des Drehverteilers mit einem Schmiermittel, wie beispielsweise Fett, befüllt werden.

Figur 3 zeigt eine Draufsicht auf die Drehverteilereinrichtung aus Figur 2. Man erkennt hier die Vielzahl von seitlichen Austritten 18, über welche beispielsweise weitere Medien zugeführt werden können.

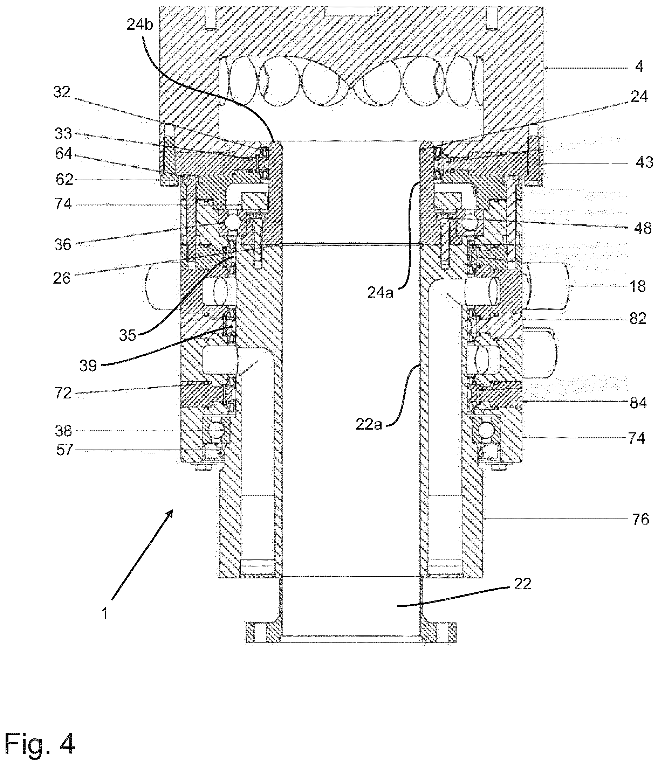

Figur 4 zeigt eine weitere Darstellung eines erfindungsgemäßen Drehverteilers. Bei dieser Darstellung ist wiederum der Verteilerkopf 4 erkennbar sowie das obere Verteilerwellensegment 24, welches mittels Schraubverbindungen 48 an dem ersten Verteilerwellensegment 22 angeordnet ist. Zwischen den beiden Verteilerwellensegmenten 22, 24 ist eine Dichtungseinrichtung 26 vorgesehen, etwa in Form eines O-Rings. Diese wird zwischen den beiden Verteilerwellensegmenten eingeklemmt. Man erkennt, dass im Arbeitsbetrieb das fließfähige Medium, wie beispielsweise das Produkt, über eine Rundung 24b (bzw. eine runde Stirnfläche) des zweiten Verteilerwellensegments 24 hinübertreten kann und letztlich bis zu der Dichtungseinrichtung 32 gelangen kann. Das Bezugszeichen 33 kennzeichnet ein weiteres Dichtungselement, welches jedoch bei der Demontage etwa zum Einwechseln des Dichtungselementes 32 herausgenommen werden kann. Das Bezugszeichen 74 kennzeichnet einen Lagerklemmring, der zum Fixieren der Lagereinrichtung 36 dient. Unterhalb der Lagereinrichtung 36 ist eine weitere Dichtungseinrichtung 35 vorgesehen. Das Bezugszeichen 39 kennzeichnet ebenfalls eine Dichtungseinrichtung. Diese beiden Dichtungseinrichtungen, bei denen es sich bevorzugt ebenfalls um Gleitdichtungen handelt, liegen jedoch an dem ersten Verteilersegment an.

Die Bezugszeichen 43, 62, 64, 72, 76, 82, und 84 kennzeichnen weitere Verbindungskomponenten, welche den mehrteiligen Aufbau des Verteilerkopfes 4 ermöglichen.

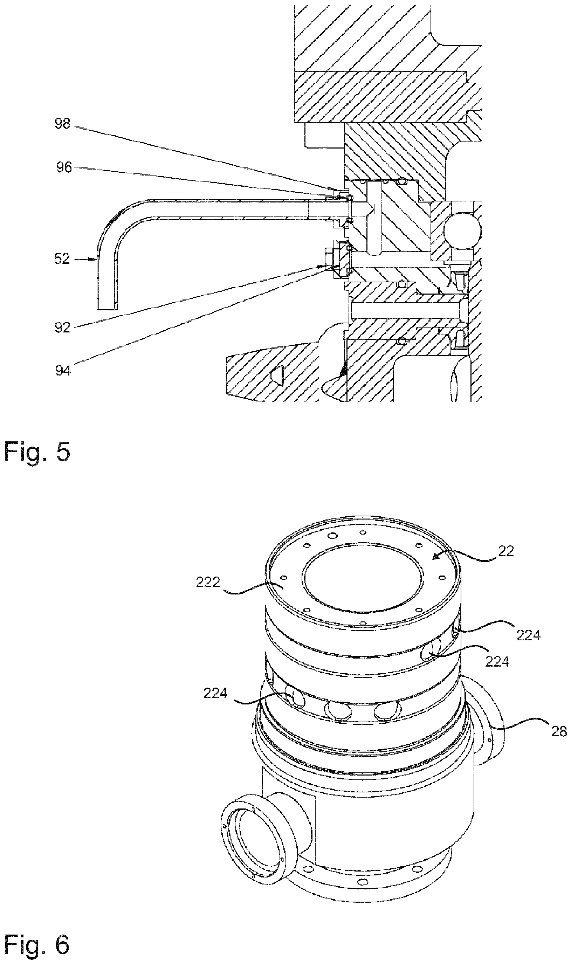

Figur 5 zeigt eine vergrößerte Ansicht der in Figur 2 gezeigten Darstellung. Hierbei ist wiederum ein Verschließelement 94 vorgesehen, mit dem ein Schmiermittelkanal geschlossen werden kann. Das Bezugszeichen 92 kennzeichnet einen entsprechenden Schraubkörper zum Öffnen dieser Öffnung. Auch die Abführeinrichtung 52 ist mittels einer Dichtungseinrichtung 96 und einem Verschließelement 98 an der Vorrichtung angeordnet. Alternativ kann der Schmiermittelkanal mit Zuführung 53 und Abführung 52 nicht nur zum Schmieren sondern auch zum Spülen des Lagers 36 dienen.

Figur 6 zeigt eine perspektivische Darstellung des ersten Verteilerwellensegments 22. Dieses Verteilerwellensegment 22 weist dabei eine Oberfläche 222 auf, die im Betrieb an einer entsprechenden Oberfläche des zweiten Verteilerwellensegments (in Figur 6 nicht gezeigt) anliegt. Weiterhin sind in dem ersten Verteilerwellensegment mehrere Öffnungen 224 vorgesehen, welche mit den in Figur 2 gezeigten Anschlüssen 18 in Strömungsverbindung stehen. Das zweite Verteilerwellensegment weist demgegenüber in einer bezüglich der Drehachse verlaufenden Umfangsrichtung keine Öffnungen auf, sondern lediglich einen sich in Richtung der Drehachse erstreckenden Kanal.

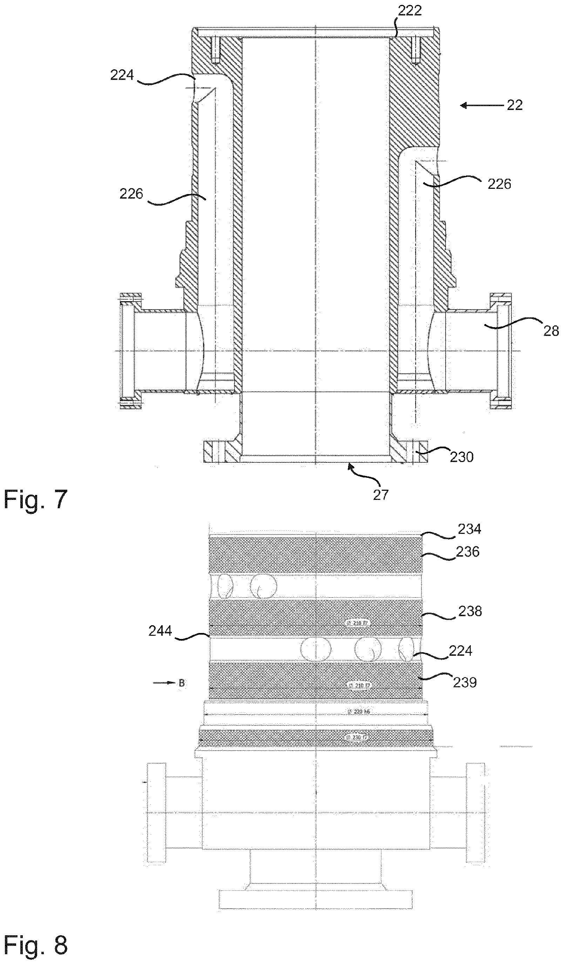

Figur 7 zeigt eine Schnittdarstellung des in Figur 6 gezeigten ersten Verteilerwellensegments 22. Man erkennt auch hier, dass dieses Verteilerwellensegment im Inneren verlaufende Kanäle 226 zum Führen eines Spülmittels aufweist. Über Öffnungen 230 kann das erste Verteilerwellensegment 22 beispielsweise an einen Ventilknoten zum Abfüllen der Flüssigkeit angeflanscht werden. Daneben ist auch wieder die Oberfläche 222 erkennbar, an der das erste Verteilerwellensegment 22 und das zweite Verteilerwellensegment 24 (nicht gezeigt) zusammengefügt werden. Die Kanäle 226 erstrecken sich bevorzugt parallel zu der oben erwähnten Drehachse D.

Figur 8 zeigt eine weitere Darstellung des ersten Verteilerwellensegments. Man erkennt hier mehrere Oberflächen 236, 238, 239 die ringförmig in Umfangsrichtung ausgebildet sind. Diese Oberflächen weisen dabei eine Beschichtung auf. Vorteilhaft handelt es sich hierbei um eine Beschichtung aus Chromoxid. Zwischen diesen beschichteten Oberflächen sind die einzelnen Öffnungen 224 erkennbar. Die Bezugszeichen 234 und 244 kennzeichnen Kanten zwischen den beschichteten Oberflächen 238 und den ringförmigen Bereichen mit den Öffnungen 224. Diese Kanten weisen hier vorteilhaft gerundete Formen auf.

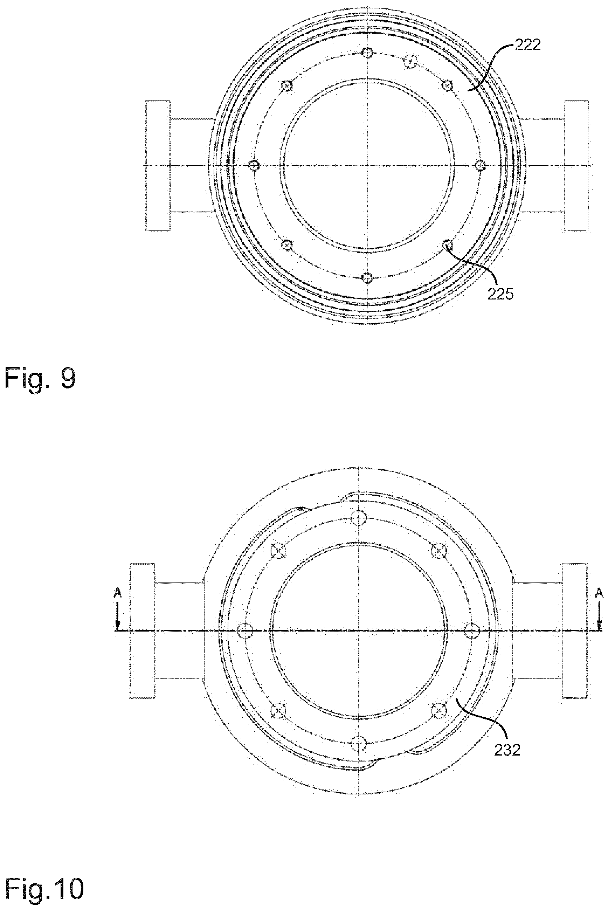

Figur 9 zeigt eine Draufsicht von oben auf das erste Verteilerwellensegment 22. Hier ist wieder die umlaufende ringförmige Fläche 222 erkennbar. Im Bereich dieser Fläche 222 befinden sich auch mehrere Bohrungen 225, durch welche Schraubverbindungen geführt werden können.

Figur 10 zeigt eine Ansicht auf das erste Verteilerwellensegment von unten. Auch hier ist eine ringförmige Oberfläche 232 vorgesehen, welche zum Anflanschen von weiteren Elementen dienen kann.

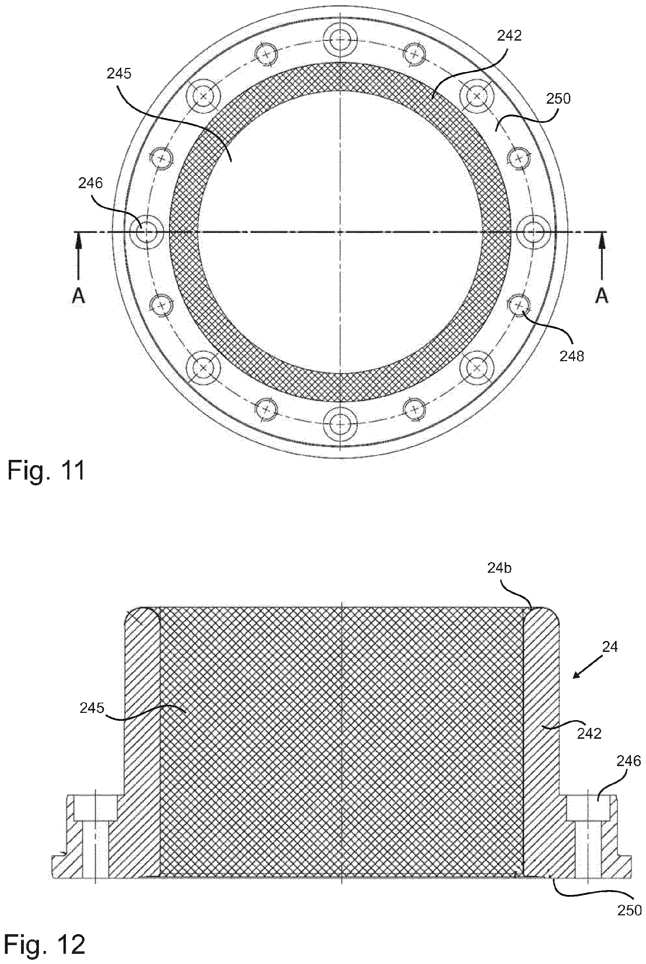

Fig. 11 zeigt das zweite Verteilerwellensegment in einer Ansicht von oben. Dabei ist auch eine umlaufende Wandung 242 erkennbar, welche den Kanal 245 umschließt.

Figur 12 zeigt eine Ansicht des zweiten Verteilerwellensegments 24. Dieses Verteilerwellensegment 24 weist - wie oben erwähnt - eine umlaufende Wandung 242 auf, durch welche hindurch wiederum ein Hohlraum 245 gebildet wird, durch den das abzufüllende Medium fließen kann. Die Wandung 242 weist an ihrer Oberkante eine gekrümmte umlaufende Stirnfläche 24b auf, welche im Betriebszustand benachbart zu einer Wandung des Verteilerkopfes 4 liegt.

Das Bezugszeichen 246 bezieht sich auf eine Bohrung, mit der das zweite Verteilerwellensegment 24 an dem ersten Verteilerwellensegment 22 angeordnet werden kann. Das Bezugszeichen 250 kennzeichnet die Oberfläche, welche im montierten Zustand an der Oberfläche 222 des ersten Verteilerwellensegments anliegt. Figur 12 zeigt eine entsprechende Seitenansicht des zweiten Verteilerwellensegments. Die Bezugszeichen 246 und 248 beziehen sich auf Bohrungen, die zum aneinander Befestigen der Verteilerwellensegmente 22, 24 dienen.

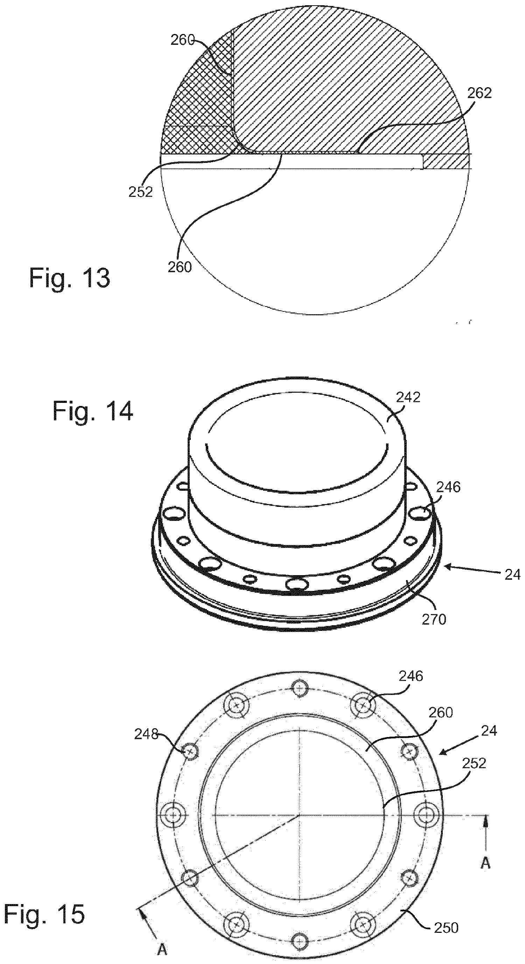

Figur 13 zeigt eine Detaildarstellung der in Figur 12 gezeigten Seitenansicht. Hierbei ist insbesondere auch eine Beschichtung 260 erkennbar, welche an der umlaufenden Wandung 242 angeordnet ist. Diese Beschichtung erstreckt sich hier auch über eine Krümmung 252 hinweg und damit in einem Bereich, der im Betriebszustand an der Oberfläche 222 anliegt. Daher kann ein Endpunkt 262, der hier insbesondere ringförmig verläuft, nicht in Berührung mit dem abzufüllenden Produkt gelangen. Die Beschichtung reicht jedoch in radialer Richtung nicht bis an die Bohrungen 246, 248 heran.

Figur 14 zeigt eine weitere perspektivische Darstellung des zweiten Verteilerwellensegments 24. Man erkennt insbesondere auch hier, dass dieses Verteilerwellensegment keine in der Umfangsrichtung angeordneten Öffnungen aufweist, über welche eine Fluidkommunikation mit dem Innenraum, durch welchen das Produkt strömt, möglich ist. Mit anderen Worten weist die Umfangswandung 242 selbst keine Öffnung auf, wohingegen die entsprechende Umfangswandung des ersten Verteilerwellensegments 22 (außenseitig) auch derartige seitliche Öffnungen aufweist. Damit ist das zweite Verteilerwellensegment hinsichtlich des strömenden Mediums ausgebildet wie ein kurzes geschlossenes Rohr ohne seitliche Öffnungen. Auch weist das zweite Verteilerwellensegment mit Ausnahme des zentralen Kanals keine innenliegenden Kanäle zum Leiten des fließfähigen Mediums auf.

Figur 15 zeigt eine Unteransicht auf das zweite Verteilerwellensegment 24. Hierbei ist wiederum die Kante 252 erkennbar. Die Beschichtung kann sich hier ausgehend von dieser Kante 252 - wie oben erwähnt - noch weiter nach außen erstrecken, beispielsweise um wenige Millimeter oder Zentimeter. Wie oben erwähnt, liegt die Oberfläche 250 im montierten Zustand an einer entsprechenden Oberfläche des ersten Verteilerwellensegments 22 an und ist daher für das Produkt nicht zugänglich.

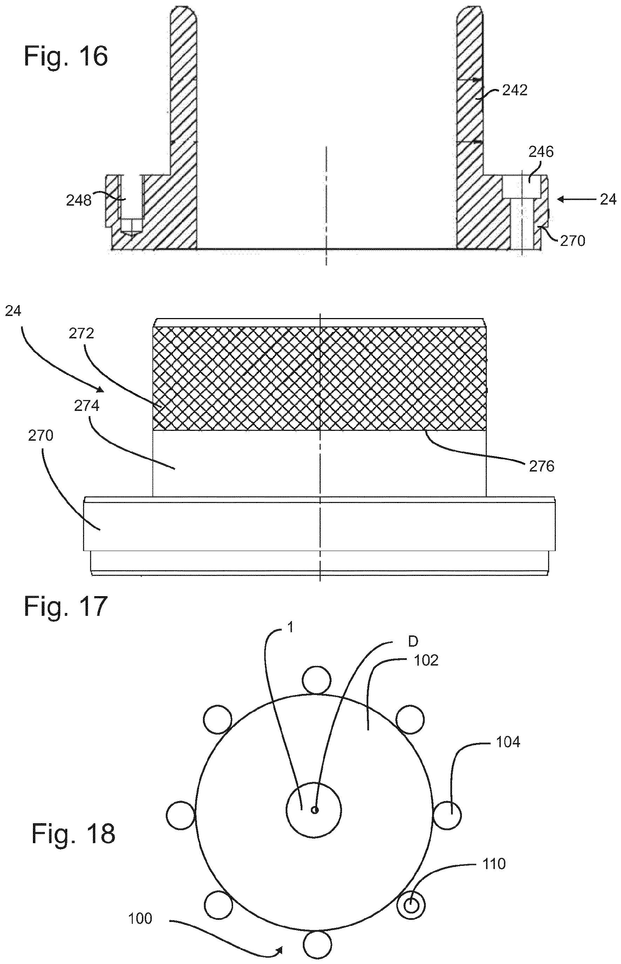

Figur 16 schließlich zeigt eine Seitenansicht aus Figur 15 entlang der Linie AA. Man erkennt, dass die Bohrungen 246 wechselseitig ausgebildet sind und insgesamt sechs Schraubbohrungen 246 vorgesehen sind, mit denen das zweite Verteilerwellensegment 24 an dem ersten Verteilerwellensegment angeordnet werden kann und sechs weitere Bohrungen 248, welche zum Befestigen des in Figur 4 gezeigten ringförmigen Körpers 74 dienen. Damit weist das zweite Verteilerwellensegment 24 einen umlaufenden und in radialer Richtung herausstehenden Ring 270 auf. Dieser Ring wiederum weist - wie dargestellt - wenigstens zwei verschiedene Arten von Bohrungen auf, wobei ein Teil dieser Bohrungen vorzugsweise als Durchgangsbohrung ausgeführt ist und der andere Teil als Sackloch. Diese beiden Arten der Bohrungen wechseln sich vorteilhaft ab und vorteilhaft sind diese Bohrungen auch regelmäßig um den Außenumfang des Rings 270 ausgebildet.

Fig. 17 zeigt eine Außenansicht des zweiten Verteilerwellensegments 24. Dabei bezieht sich das Bezugszeichen 272 auf eine Beschichtung bzw. einen beschichteten Bereich. Das Bezugszeichen 274 kennzeichnet einen unter dem beschichteten Bereich 272 angeordneten unbeschichteten Bereich. Bei der Beschichtung kann es sich wiederum um eine Beschichtung aus Chromoxid handeln. Damit erstreckt sich die Beschichtung der Außenoberfläche des zweiten Verteilerwellensegments auch nicht entlang der gesamten Höhe dieses Verteilerwellensegments sondern einerseits in denjenigen Bereichen, welche von dem Produkt erreicht werden können. Andererseits geht jedoch auch hier eine Außenbeschichtung auch noch über diejenigen Bereich, welche von dem Produkt erreicht werden können, hinaus. Diese Anordnung der Beschichtung ist insbesondere geeignet für ein zweites Verteilersegment, welches aus einem höherwertigen Material gefertigt wurde. Dadurch erreicht man eine hohe Korrosionsbeständigkeit durch die Materialauswahl. Die zusätzliche Beschichtung im Bereich der Rotationsdichtung verbessert die Laufeigenschaft der Dichtungseinrichtung auf der Welle. Das Bezugszeichen 276 kennzeichnet das Ende der Beschichtung Fig. 18 zeigt eine grob schematische Darstellung einer Fülleinrichtung 100. Diese Fülleinrichtung weist einen um die Drehachse D drehbaren Träger 102 auf, an dem eine Vielzahl von Füllelementen 104 angeordnet ist, welche zum Befüllen von Behältnissen 110 dienen. Weiterhin weist die Vorrichtung Halteeinrichtungen auf, welche die Behältnisse halten. Dabei werden die Behältnisse während ihres Transports befüllt.

Das Bezugszeichen 1 kennzeichnet den hier beschriebenen Drehverteiler, der die abzufüllende Flüssigkeit (beispielsweise ein Getränk) über (nicht gezeigte) Zuleitungen auf die einzelnen Füllelemente 104 verteilt. Dabei fallen die Drehachse des Drehverteilers 1 und die Drehachse des Trägers 102 zusammen.

### Bezugszeichenliste

- 1: Drehverteiler
- 2: Verteilerwelle
- 4: Verteilerkopf
- 18: Zuführöffnung / Anschlüsse
- 22: erstes Verteilerwellensegment
- 22a: Oberfläche
- 24: zweites Verteilerwellensegment
- 24a: Oberfläche
- 24b: gekrümmte umlaufende Stirnfläche der Wandung 242
- 26: Dichtungseinrichtung
- 27: Zuführeinrichtung
- 28: Zuführöffnung
- 32: erste Dichtungseinrichtung / Gleitdichtung
- 33: weiteres Dichtungselement
- 34: Lagereinrichtung
- 35: weitere Dichtungseinrichtung
- 36: Lager
- 38: weitere Lagereinrichtung
- 39: Dichtungseinrichtung
- 42: Eingangsöffnung
- 44: Ausgangsöffnungen
- 48: Schraubverbindungen
- 52: Abfluss / Abführeinrichtung
- 53: Zuführöffnung
- 55: weitere Öffnung
- 57: Dichtungseinrichtung
- 74: Lagerklemmring
- 92: Schraubköper
- 94: Verschließelement
- 96: Dichtungseinrichtung
- 98: Verschließelement
- 100: Fülleinrichtung
- 102: Träger
- 104: Füllelemente
- 110: Behältnisse
- 222: Oberfläche
- 224: Öffnungen
- 225: Bohrungen
- 226: Kanäle
- 230: Öffnungen
- 232: Oberfläche
- 234,244: Kanten
- 236, 238, 239: Oberflächen
- 242: umlaufende Wandung
- 245: Hohlraum / Kanal
- 246,248: Bohrungen
- 250: Oberfläche
- 252: Krümmung / Kante
- 260: Beschichtung
- 262: Endpunkt
- 270: herausstehender Ring
- 272: Beschichtung
- 274: unbeschichteter Bereich
- 276: Ende der Beschichtung

- D: Drehachse
- AA: Linie

## Patentansprüche

1. Verteilerwelle (2) zum Verteilen von fließfähigen Medien, wobei die Verteilerwelle wenigstens abschnittsweise als Hohlwelle mit einem Kanal zum Leiten des fließfähigen Mediums ausgebildet ist und die Verteilerwelle (2) wenigstens ein erstes Verteilerwellensegment (22) und ein zweites Verteilerwellensegment (24) aufweist, wobei das zweite Verteilerwellensegment (24) lösbar an dem ersten Verteilerwellensegment (22) angeordnet ist und sich das zweite Verteilerwellensegment (24) an das erste Verteilerwellensegment (22) anschließt und wobei wenigstens das zweite Verteilerwellensegment (24) eine dem fließfähigen Medium zugewandte Oberfläche (24a) aufweist, **dadurch gekennzeichnet, dass** das erste Verteilerwellensegment (22) und das zweite Verteilerwellensegment (24) sich hinsichtlich ihrer Werkstoffe und/oder hinsichtlich einer Oberflächenbeschichtung voneinander unterscheiden.

2. Drehverteiler (1) zum Verteilen von fließfähigen Medien mit einer Verteilerwelle (2) und mit einem Verteilerkopf (4), welcher bezüglich der Verteilerwelle (2) und bezüglich einer vorgegebenen Drehachse D drehbar ist, wobei der Verteilerkopf (4) wenigstens eine erste Eingangsöffnung (42) zum Zuführen des fließfähigen Mediums und eine Vielzahl von Ausgangsöffnungen (44) zum Abführen des fließfähigen Mediums aufweist und eine Strömungsverbindung zwischen dieser Eingangsöffnung (42) und den Ausgangsöffnungen (44) besteht, wobei die Verteilerwelle (2) wenigstens ein erstes Verteilerwellensegment (22) und ein zweites Verteilerwellensegment (24) aufweist, wobei das zweite Verteilerwellensegment (24) lösbar an dem ersten Verteilerwellensegment (22) angeordnet und sich das zweite Verteilerwellensegment in Richtung der Drehachse D an das erste Verteilerwellensegment (22) anschließt und wobei das zweite Verteilerwellensegment (24) näher an dem Verteilerkopf (4) angeordnet ist als das erste Verteilerwellensegment (22) und wobei wenigstens das zweite Verteilerwellensegment (24) eine dem fließfähigen Medium zugewandte Oberfläche aufweist, **dadurch gekennzeichnet, dass** das erste Verteilerwellensegment (22) und das zweite Verteilerwellensegment (24) sich hinsichtlich ihrer Werkstoffe und/oder hinsichtlich einer Oberflächenbeschichtung voneinander unterscheiden.

3. Drehverteiler (1) nach Anspruch 2, **dadurch gekennzeichnet, dass**
auch das erste Verteilerwellensegment (22) eine dem fließfähigen Medium zugewandte Oberfläche (22a) aufweist.

4. Drehverteiler (1) nach Anspruch 2 oder 3, **dadurch gekennzeichnet, dass**
das zweite Verteilerwellensegment (24) an der dem fließfähigen Medium zugewandten Oberfläche (24a) eine Beschichtung (260) aufweist.

5. Drehverteiler (1) nach Anspruch 4, **dadurch gekennzeichnet, dass**
sich die Beschichtung auch in Oberflächenbereiche des zweiten Verteilerwellensegments (24) erstreckt, welche nicht von dem fließfähigen Medium erreicht werden.

6. Drehverteiler (1) nach wenigstens einem der vorangegangenen Ansprüche 2 bis 5, **dadurch gekennzeichnet, dass**
zwischen dem ersten Verteilerwellensegment (22) und dem zweiten Verteilerwellensegment (24) eine Dichtungseinrichtung (26) angeordnet ist.

7. Drehverteiler (1) nach wenigstens einem der vorangegangenen Ansprüche 2 bis 6, **dadurch gekennzeichnet, dass**
wenigstens ein Bereich einer Oberfläche des zweiten Verteilerwellensegments (24), welche Oberfläche an einer Oberfläche des ersten Verteilerwellensegments (22) anliegt, beschichtet ist.

8. Drehverteiler (1) nach wenigstens einem der vorangegangenen Ansprüche 2 bis 7, **dadurch gekennzeichnet, dass**
das zweite Verteilerwellensegment aus einem Material gefertigt ist, welche aus einer Gruppe von Materialien ausgewählt ist, welche 1.4301, 1.4404, 1.4435, 1.4539, 1.4552, 1.4581, 1.4439, 2.4856 enthält.

9. Drehverteiler (1) nach wenigstens einem der vorangegangenen Ansprüche 2 bis 8, **dadurch gekennzeichnet, dass**
wenigstens eine Beschichtung aus einer Gruppe von Beschichtungen ausgewählt ist, welche Keramikbeschichtungen, Metallbeschichtungen und Kunststoffbeschichtungen enthält.

10. Drehverteiler (1) nach wenigstens einem der vorangegangenen Ansprüche 2 bis 9, **dadurch gekennzeichnet, dass**
an wenigstens einem Oberflächenabschnitt des zweiten Verteilerwellensegments (24) eine erste Dichtungseinrichtung (32) angeordnet ist.

11. Drehverteiler (1) nach Anspruch 10, **dadurch gekennzeichnet, dass**
die Dichtungseinrichtung (32) eine Gleitdichtung (32) ist.

12. Drehverteiler nach Anspruch 10, **dadurch gekennzeichnet, dass**
an dem zweiten Verteilerwellensegment (24) eine Lagereinrichtung (34) anliegt.

13. Drehverteiler (1) nach wenigstens einem der vorangegangenen Ansprüche 2 bis 12, **dadurch gekennzeichnet, dass**
wenigstens ein Abschnitt des zweiten Verteilerwellensegments (24) an dem Verteilerkopf (4) anliegt.

14. Fülleinrichtung (100) zum Befüllen von Behältnissen (110) mit einem drehbaren Träger (102), an dem eine Vielzahl von Füllelementen (104) zum Befüllen der Behältnisse (110) angeordnet ist und mit einem Drehverteiler nach wenigstens einem der vorangegangenen Ansprüche, der ein abzufüllendes Medium auf die einzelnen Füllelemente (104) verteilt.

## Claims

1. Distributor shaft (2) for distributing free-flowing media, wherein the distributing shaft is constructed at least in some sections as a hollow shaft with a channel for conveying the free-flowing medium and the distributor shaft (2) has at least a first distributor shaft segment (22) and a second distributor shaft segment (24), wherein the second distributor shaft segment (24) is releasably disposed on the first distributor shaft segment (22) and the second distributor shaft segment (24) adjoins the first distributor shaft segment (22), and wherein at least the second distributor shaft segment (24) has a surface (24a) facing the free-flowing medium,
**characterised in that**
the first distributor shaft segment (22) and the second distributor shaft segment (24) differ with regard to their materials and/or with regard to a surface coating from each other.

2. Rotary distributor (1) for distributing free-flowing media with a distributor shaft (2) and with a distributor head (4), which is rotatable relative to the distributor shaft (2) and with respect to a predetermined axis of rotation D, wherein the distributor head (4) has at least one first inlet opening (42) for delivering the free-flowing medium and a plurality of outlet openings (44) for discharging the free-flowing medium and a flow connection exists between this inlet opening (42) and the outlet openings (44),
wherein
the distributor shaft (2) has at least afirst distributor shaft segment (22) and a second distributor shaft segment (24), wherein the second distributor shaft (24) is releasably disposed on the first distributor shaft segment (22) and the second distributor shaft segment adjoins the first distributor shaft segment (22) in the direction of the axis of rotation D, and wherein the second distributor shaft segment (24) is disposed closer to the distributor head (4) than the first distributor shaft segment (22) and wherein at least the second distributor shaft segment has a surface facing the free-flowing medium
**characterised in that**
the first distributor shaft segment (22) and the second distributor shaft segment (24) differ with regard to their materials and/or with regard to a surface coating from each other.

3. Rotary distributor according to claim 2,
**characterised in that**
the first distributor shaft segment (22) also has a surface (22a) facing the free-flowing medium.

4. Rotary distributor (1) according to claim 2 or 3,
**characterised in that**
the second distributor shaft segment (24) has a coating (260) on the surface (24a) facing the free-flowing medium.

5. Rotary distributor (1) according to claim 4,
**characterised in that**
the coating also extends in surface regions of the second distributor shaft segment (24) which is not reached by the free-flowing medium.

6. Rotary distributor (1) according to at least one of the preceding claims 2 to 5,
**characterised in that**
a sealing means (26) is disposed between the first distributor shaft segment (22) and the second distributor shaft segment (24).

7. Rotary distributor (1) according to at least one of the preceding claims 2 to 6,
**characterised in that**
at least one region of a surface of the second distributor shaft segment (24), which surface bears against a surface of the first distributor shaft segment (22), is coated.

8. Rotary distributor (1) according to at least one of the preceding claims 2 to 7,
**characterised in that**
the second distributor shaft segment is made of a material which is selected from a group of materials which includes 1.4301, 1.4404, 1.4435, 1.4539, 1.4552, 1.4581, 1.4439, 2.4856.

9. Rotary distributor (1) according to at least one of the preceding claims 2 to 8,
**characterised in that**
at least one coating is selected from a group of coatings which includes ceramic coatings, metal coatings and plastic coatings.

10. Rotary distributor (1) according to at least one of the preceding claims 2 to 9,
**characterised in that**
a first sealing means (32) is disposed on at least one surface portion of the second distributor shaft segment (24).

11. Rotary distributor (1) according to claim 10,
**characterised in that**
the sealing means (32) is a sliding seal (32).

12. Rotary distributor (1) according to claim 10,
**characterised in that**
a bearing arrangement (34) bears against the second distributor shaft segment (24).

13. Rotary distributor (1) according to at least one of the preceding claims 2 to 12,
**characterised in that**
at least one section of the second distributor shaft segment (24) bears against the distributor head (4).

14. Filling device (100) for filling containers (110) with a rotatable support (102), on which a plurality of filling elements (104) is disposed for filling the containers (110) and with a rotary distributor according to at least one of the preceding claims, which distributes a medium to be bottled to the individual filling elements (104).

## Revendications

1. Arbre distributeur (2) servant à distribuer des milieux pouvant s'écouler, dans lequel l'arbre distributeur est réalisé au moins par endroits sous la forme d'un arbre creux avec un canal servant à acheminer le milieu pouvant s'écouler et l'arbre distributeur (2) présente au moins un premier segment d'arbre distributeur (22) et un deuxième segment d'arbre distributeur (24), dans lequel le deuxième segment d'arbre distributeur (24) est disposé de manière amovible au niveau du premier segment d'arbre distributeur (22) et le deuxième segment d'arbre distributeur (24) se raccorde au premier segment d'arbre distributeur (22) et dans lequel au moins le deuxième segment d'arbre distributeur (24) présente une surface (24a) tournée vers le milieu pouvant s'écouler,
**caractérisé en ce que**
le premier segment d'arbre distributeur (22) et le deuxième segment d'arbre distributeur (24) se distinguent l'un de l'autre concernant leurs matériaux et/ou concernant un revêtement de surface.

2. Distributeur rotatif (1) servant à distribuer des milieux pouvant s'écouler avec un arbre distributeur (2) et avec une tête distributrice (4), qui peut tourner par rapport à l'arbre distributeur (2) et par rapport à un axe de rotation D prédéfini, dans lequel la tête distributrice (4) présente au moins une première ouverture d'entrée (42) servant à amener le milieu pouvant s'écouler et une pluralité d'ouvertures de sortie (44) servant à évacuer le milieu pouvant s'écouler et une liaison d'écoulement est présente entre ladite ouverture d'entrée (42) et les ouvertures de sortie (44),
dans lequel l'arbre distributeur (2) présente au moins un premier segment d'arbre distributeur (22) et un deuxième segment d'arbre distributeur (24), dans lequel le deuxième segment d'arbre distributeur (24) est disposé de manière amovible au niveau du premier segment d'arbre distributeur (22) et le deuxième segment d'arbre distributeur se raccorde au premier segment d'arbre distributeur (22) en direction de l'axe de rotation D et dans lequel le deuxième segment d'arbre distributeur (24) est disposé davantage à proximité de la tête distributrice (4) que le premier segment d'arbre distributeur (22) et dans lequel au moins le deuxième segment d'arbre distributeur (24) présente une surface tournée vers le milieu pouvant s'écouler,
**caractérisé en ce que**
le premier segment d'arbre distributeur (22) et le deuxième segment d'arbre distributeur (24) se distinguent l'un de l'autre concernant leurs matériaux et/ou concernant un revêtement de surface.

3. Distributeur rotatif (1) selon la revendication 2,
**caractérisé en ce que**
le premier segment d'arbre distributeur (22) également présente une surface (22a) tournée vers le milieu pouvant s'écouler.

4. Distributeur rotatif (1) selon la revendication 2 ou 3,
**caractérisé en ce que**
le deuxième segment d'arbre distributeur (24) présente, au niveau de la surface (24a) tournée vers le milieu pouvant s'écouler, un revêtement (260).

5. Distributeur rotatif (1) selon la revendication 4,
**caractérisé en ce que**
le revêtement s'étend également dans des zones de surface du deuxième segment d'arbre distributeur (24), qui ne sont pas atteintes par le milieu pouvant s'écouler.

6. Distributeur rotatif (1) selon au moins l'une quelconque des revendications 2 à 5,
**caractérisé en ce que**
un système d'étanchéité (26) est disposé entre le premier segment d'arbre distributeur (22) et le deuxième segment d'arbre distributeur (24).

7. Distributeur rotatif (1) selon au moins l'une quelconque des revendications précédentes 2 à 6,
**caractérisé en ce que**
au moins une zone d'une surface du deuxième segment d'arbre distributeur (24), laquelle surface repose au niveau d'une surface du premier segment d'arbre distributeur (22), est revêtue.

8. Distributeur rotatif (1) selon au moins l'une quelconque des revendications précédentes 2 à 7,
**caractérisé en ce que**
le deuxième segment d'arbre distributeur est confectionné à partir d'un matériau qui est choisi parmi un groupe de matériaux qui contient 1.4301, 1.4404, 1.4435, 1.4539, 1.4552, 1.4581, 1.4439, 2.4856.

9. Distributeur rotatif (1) selon au moins l'une quelconque des revendications précédentes 2 à 8,
**caractérisé en ce que**
au moins un revêtement est choisi parmi un groupe de revêtements qui contient des revêtements en céramique, des revêtements en métal et des revêtements en plastique.

10. Distributeur rotatif (1) selon au moins l'une quelconque des revendications précédentes 2 à 9,
**caractérisé en ce que**
un premier système d'étanchéité (32) est disposé au niveau au moins d'une section de surface du deuxième segment d'arbre distributeur (24).

11. Distributeur rotatif (1) selon la revendication 10,
**caractérisé en ce que**
le système d'étanchéité (32) est un joint d'étanchéité glissant (32).

12. Distributeur rotatif selon la revendication 10,
**caractérisé en ce que**
un système de palier (34) repose au niveau du deuxième segment d'arbre distributeur (24).

13. Distributeur rotatif (1) selon au moins l'une quelconque des revendications précédentes 2 à 12,
**caractérisé en ce que**
au moins une section du deuxième segment d'arbre distributeur (24) repose au niveau de la tête distributrice (4).

14. Système de remplissage (100) servant à remplir des récipients (110) avec un support (102) pouvant tourner, au niveau duquel est disposée une pluralité d'éléments de remplissage (104) servant à remplir les récipients (110), et avec un distributeur rotatif selon au moins l'une quelconque des revendications précédentes, qui distribue un milieu à transvaser sur les divers éléments de remplissage (104).
